(19) Europäisches Patentamt
European Patent Office
Office européen des brevets

(11) EP 1 628 782 B1

(12) # EUROPÄISCHE PATENTSCHRIFT

(45) Veröffentlichungstag und Bekanntmachung des Hinweises auf die Patenterteilung:
**30.06.2010 Patentblatt 2010/26**

(21) Anmeldenummer: **04730232.8**

(22) Anmeldetag: **29.04.2004**

(51) Int Cl.:
***B05D 7/00*** *(2006.01)* ***C08G 18/80*** *(2006.01)*
***C09D 133/06*** *(2006.01)* ***C09D 175/04*** *(2006.01)*

(86) Internationale Anmeldenummer:
**PCT/EP2004/004551**

(87) Internationale Veröffentlichungsnummer:
**WO 2004/101175 (25.11.2004 Gazette 2004/48)**

(54) **THERMISCH HÄRTBARE EINKOMPONENTEN-BESCHICHTUNGSSTOFFE, VERFAHREN ZU IHRER HERSTELLUNG UND IHRE VERWENDUNG**

THERMALLY HARDENABLE SINGLE-COMPONENT COATING MATERIALS, METHOD FOR THE PRODUCTION AND USE THEREOF

SUBSTANCES DE REVETEMENT A UNE COMPOSANTE THERMODURCISSABLES, PROCEDE POUR LE PREPARER ET LEUR UTILISATION

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.05.2003 DE 10322432**

(43) Veröffentlichungstag der Anmeldung:
**01.03.2006 Patentblatt 2006/09**

(73) Patentinhaber: **BASF Coatings GmbH**
**48165 Münster (DE)**

(72) Erfinder:
- **WILKE, Guido**
**48151 Münster (DE)**
- **KLEINE BECKMANN, Helmut**
**48346 Ostbevern (DE)**
- **HANNING, Andreas**
**48249 Dülmen (DE)**

(56) Entgegenhaltungen:
**EP-B- 1 042 402 WO-A-01/85823**
**US-A- 5 187 199**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 628 782 B1

Printed by Jouve, 75001 PARIS (FR)

## Beschreibung

Die vorliegende Erfindung betrifft neue, thermisch härtbare Einkomponenten-Beschichtungsstoffe. Außerdem betrifft die vorliegende Erfindung ein neues Verfahren zur Herstellung thermisch härtbarer Einkomponenten-Beschichtungsstoffe. Des Weiteren betrifft die vorliegenden Erfindung die Verwendung der neuen, thermisch härtbaren Einkomponenten-Beschichtungsstoffe als Klarlacke für die Herstellung von Klarlackierungen, insbesondere von Klarlackierungen von farb- und/oder effektgebenden Mehrschichtlackierungen.

Moderne Personenkraftwagen, insbesondere Personenkraftwagen oder Oberklasse, weisen farb- und/oder effektgebende Mehrschichtlackierungen auf. Bekanntermaßen umfassen diese eine Elektrotauchlackierung, eine Füllerlackierung, Steinschlagschutzgrundierung oder Funktionsschicht, eine farb- und/oder effektgebende Basislackierung und eine Klarlackierung. Die Mehrschichtlackierungen werden mit Hilfe so genannter Nass-in-nass-Verfahren hergestellt, bei denen man auf eine getrocknete, indes nicht gehärtete Basislackschicht eine Klarlackschicht appliziert, wonach man zumindest Basislackschicht und die Klarlackschicht gemeinsam thermisch härtet. In dieses Verfahren kann auch die Herstellung der Elektrotauchlackierung und der Füllerlackierung, Steinschlagschutzgrundierung oder Funktionsschicht einbezogen werden.

Die farb- und/oder effektgebenden Mehrschichtlackierungen weisen bekanntermaßen die so genannte Automobilqualität auf. Gemäß dem europäischen Patent EP 0 352 298 B1, Seite 15, Zeile 42, bis Seite 17, Zeile 14, bedeutet dies, dass die betreffenden Mehrschichtlackierungen

(1) einen hohen Glanz,
(2) eine hohe Brillanz,
(3) eine hohe Abbildungsunterscheidbarkeit (DOI, distinctiveness of the reflected image),
(4) ein hohes und gleichmäßiges Deckvermögen,
(5) eine einheitliche Trockenschichtdicke,
(6) eine hohe Benzinbeständigkeit,
(7) eine hohe Lösemittelbeständigkeit,
(8) eine hohe Säurebeständigkeit,
(9) eine hohe Härte,
(10) eine hohe Abriebfestigkeit,
(11) eine hohe Kratzfestigkeit,
(12) eine hohe Schlagfestigkeit,
(13) eine hohe Zwischenschichthaftung und Haftung auf dem Substrat und
(14) eine hohe Witterungsstabilität und UV-Beständigkeit
aufweisen. Weitere wesentliche technologische Eigenschaften sind
(15) eine hohe Beständigkeit gegenüber Schwitzwasser,
(16) keine Neigung zum Weißanlaufen und
(17) eine hohe Stabilität gegenüber Baumharz und Vogelkot.

Dabei prägen insbesondere die Klarlackierungen so wesentliche technologische Eigenschaften wie

(1) Glanz,
(2) Brillanz,
(3) Abbildungsunterscheidbarkeit (DOI, distinctiveness of the reflected image),
(6) Benzinbeständigkeit,
(7) Lösemittelbeständigkeit,
(8) Säurebeständigkeit,
(9) Härte,
(10) Abriebfestigkeit,
(11) Kratzfestigkeit,
(14) Witterungsstabilität und UV-Beständigkeit,
(15) Beständigkeit gegenüber Schwitzwasser,
(16) Beständigkeit gegenüber Weißanlaufen und
(17) Stabilität gegenüber Baumharz und Vogelkot.

An die Qualität der Klarlackierungen werden deshalb besonders hohe Anforderungen gestellt.

Aber auch an die technologischen Eigenschaften der Klarlacke, aus denen diese Klarlackierungen hergestellt werden, werden besondere Anforderungen gestellt. Zunächst einmal müssen sie die Klarlackierungen in der erforderlichen Qualität problemlos und hervorragend reproduzierbar liefern. Sie müssen in einfacher und hervorragend reproduzierbarer Weise herstellbar sein.

Nicht zuletzt müssen sie auch noch in der Linie beim Automobilhersteller mit Hilfe moderner Applikationsmethoden, wie das pneumatische Spritzlackieren mit pneumatischen Handspritzpistolen und automatischen Spritzpistolen oder das elektrostatische Spritzlackieren (ESTA) mit Handspritzpistolen oder automatischen Hochrotationsglocken, problemlos in Trockenschichtdicken von 45 μm und mehr ohne Bildung von Läufer und Kocher applizierbar sein.

Für die Wirtschaftlichkeit der Lackierung ist es essenziell, dass die Klarlacke bei der Applikation einen hohen Festkörpergehalt aufweisen. Dennoch darf die Verarbeitungsviskosität der Klarlacke die von der Lackieranlage vorgegebene Grenze nicht überschreiten. Beispielsweise sollen die Klarlacke bei einer Verarbeitungsauslaufzeit von 25 Sekunden nach DIN EN ISO 2431 (DIN ISO-Becher mit 4 mm-Auslaufdüse) einen Festkörpergehalt von > 45 und insbesondere > 50 Gew.-% haben.

Für die Applikationsfähigkeit der Klarlacke mit Hilfe von ESTA ist es weiterhin essenziell, dass sie weder einen zu niedrigen noch einen zu hohen elektrischen Widerstand aufweisen. Technisch wünschenswert ist ein elektrischer Widerstand im Bereich von 600 bis 1.300 KΩ.

Thermisch härtbare Einkomponenten-Beschichtungsstoffe, die

- hydroxylgruppenhaltige (Meth)Acrylat(co)polymerisate,
- mindestens zwei Vernetzungsmittel, ausgewählt aus der Gruppe, bestehend aus Tris(alkoxycarbonylamino)triazinen, Melamin-Formaldehyd-Harzen und blockierten Polyisocyanaten,
- mindestens einen Zusatzstoff und
- organische Lösemittel enthalten,

sind bekannt.

Aus dem deutschen Patent DE 697 029 927 T2 sind Klarlacke bekannt, die (Meth)Acrylatcopolymerisate mit sekundären Hydroxylgruppen enthalten. Die Beschichtungsstoffe können auch noch (Meth)Acrylatcopolymerisate mit primären Hydroxylgruppen enthalten. Als obligatorische Vernetzungsmittel werden Tris(alkoxycarbonylamino)triazine verwendet. Als so genannte Hilfsvernetzerkomponenten können unter anderen nicht näher spezifizierte blockierte Polyisocyanate, Aminoharze und Melaminharze eingesetzt werden. Ihre Mengen soll aber 20 Gew.-% der Gesamtmenge an (Meth)Acrylatcopolymerisaten, Tris(alkoxycarbonylamino)triazinen und Hilfsvernetzerkomponenten nicht überschreiten. Die bekannten Klarlacke liefern Klarlackierungen von hoher Säurebeständigkeit, Witterungsbeständigkeit und Vergilbungsbeständigkeit; über die primäre Hydroxylgruppen enthaltenden (Meth)Acrylatcopolymerisate können noch so wichtige Eigenschaften, wie Kratzfestigkeit, Biegefestigkeit und Schlagzähigkeit, eingestellt werden.

Aus der internationalen Patentanmeldung WO 96/34905 A sind Klarlacke bekannt, die 30 bis 90 Gew.-%, bezogen auf den Festkörper des Klarlacks, eines (Meth)Acrylatcopolymerisats und eines alkylierten Melamin-Formaldehyd-Harzes oder eines Polyisocyanats und eines Polymerisats mit mindestens zwei isocyanatreaktiven Gruppen sowie 10 bis 70 Gew.-%, bezogen auf den Festkörper des Klarlacks, eines Tris(alkxycarbonylamino)triazins enthalten. Die hieraus hergestellten Klarlackierungen weisen eine hohe Abriebfestigkeit und Etchbeständigkeit auf.

Aus der internationalen Patentanmeldung WO 97/47700 A sind Klarlacke bekannt, die (Meth)Acrylatcopolymerisate mit sekundären Hydroxylgruppen, Tris(alkxycarbonylamino)triazine und gegebenenfalls weitere Vernetzungsmittel, wie nicht näher spezifizierte blockierte Polyisocyanate und/oder Aminoplastharze enthalten. Die Klarlacke zeichnen sich durch eine hohe Lagerstabilität und einen geringen Gehalt an organischen Lösemitteln aus. Hieraus hergestellte Klarlackierungen haben eine hohe Härte, einen hohen Glanz, eine gute Haftung zwischen Basislackierung und Klarlackierung, einen guten Decklackstand, eine gute Kratzfestigkeit, eine gute Beständigkeit gegen klimatische Einflüsse, organische Lösemittel und Säuren sowie eine hohe Resistenz gegenüber Vergilbung und Weißanlaufen.

Aus dem amerikanischen Patent US 5,574,103 A oder der europäischen Patentanmeldung EP 0 604 922 A1 sind Klarlacke bekannt, die hydroxylgruppenhaltige (Meth)Acrylatcopolymerisate, Tris(alkoxycarbonylamino)triazine und ein beliebiges Aminoplastharz enthalten. Die hieraus hergestellten Klarlackierungen weisen eine gute Etchbeständigkeit auf.

Aus dem amerikanischen Patent US 5,187,199 sind Klarlacke bekannt die (Meth)acrylatpolymerisate, Oximblockierte Polyisocyanate, wasserlösliche Melamin-Formaldehydharze und nicht wasserlösliche Melamin-Formaldehydharze in einer wässrigen Dispersion enthalten.

Aus dem europäischen Patent EP 0 843 694 B1 sind Klarlacke bekannt, die mindestens zwei hydroxylgruppenhaltige (Meth)Acrylatcopolymerisate, 10 bis 50 Gew.-%, bezogen auf den Festkörper, eines blockierten Polyisocyanats sowie 0 bis 50 Gew.-%, bezogen auf den Festkörper, eines Tris(alkoxycarbonylamino)triazins und/oder eines beliebigen Aminoplastharzes enthalten. Als Blockierungsmittel können neben zahlreichen anderen Pyrazole verwendet werden. Namentlich ist 2,3-Dimethylpyrazol erwähnt. Dieses Derivat ist indes kein Blockierungsmittel, da es kein isocyanatreaktives Wasserstoffatom enthält. Als Aminoplastharz kann neben zahlreichen anderen auch Cymel ® 327, ein wasserlösliches, reaktives Melamin-Formaldehyd-Harz, das einen mittleren bis hohen Alkylierungsgrad und eine mittlere bis hohe Iminofunktionalität aufweist, verwendet werden. Die aus den Klarlacken hergestellten Klarlackierungen haben einen guten Decklackstand, eine gute Säurebeständigkeit und eine gute Beständigkeit gegen Schwitzwasserbelastung.

Nicht zuletzt sind aus dem europäischen Patent EP 1 042 402 B1 Klarlacke bekannt, die hydroxylgruppenhaltige (Meth)Acrylatcopolymerisate und, bezogen auf den Festkörper, 20 bis 35 Gew.-% eines beliebigen Aminoplastharzes sowie 1 bis 20 Gew.-% eines Tris(alkoxycarbonylamino)triazins enthalten. Dabei liegt die Gesamtmenge der Aminoplastharze und der Tris(alkoxycarbonylamino)triazine bei 25 bis 45 Gew.-% des Festkörpers. Die Verwendung von blockierten Polyisocyanaten ist nicht vorgesehen. Die aus den Klarlacken hergestellten Klarlackierungen weisen eine hohe Abriebfestigkeit (marring resistance), eine gute Etchbeständigkeit und einen guten optischen Gesamteindruck (Appearance) auf.

Die bekannten Klarlacke haben den Nachteil, dass ihre Applikationsfähigkeit und ihr Festkörpergehalt bei der Applikation zu wüschen übrig lassen. Außerdem verlieren die bekannten Klarlackierungen häufig ihre Automobilqualität, wenn die Klarlacke, aus denen sie hergestellt werden, in ihrer Applikationsfähigkeit und ihren Festkörpergehalt bei der Applikation optimiert werden.

Der vorliegenden Erfindung lag daher die Aufgabe zugrunde, neue, thermisch härtbare Einkomponentensysteme zu finden, die die Nachteile des Standes der Technik nicht mehr länger aufweisen.

Sie sollen in besonders einfacher Weise und hervorragend reproduzierbar herstellbar sein und insbesondere als Klarlacke zur Herstellung von Klarlackierungen, insbesondere Klarlackierungen von farb- und/oder effektgebenden Mehrschichtlackierungen, verwendbar sein.

Sie sollen in der Linie beim Automobilhersteller mit Hilfe moderner Applikationsmethoden, wie das pneumatische Spritzlackieren mit pneumatischen Handspritzpistolen und automatischen Spritzpistolen oder das elektrostatische Spritzlackieren (ESTA) mit Handspritzpistolen oder automatischen Hochrotationsglocken, problemlos in Trockenschichtdicken von 45 $\mu$m und mehr ohne Bildung von Läufern und Kochern applizierbar sein.

Bei der Applikation sollen sie einen hohen Festkörpergehalt, vorzugsweise > 40 Gew.-% aufweisen. Dennoch darf ihre Verarbeitungsviskosität die von der Lackieranlage gesetzten Grenzen nicht überschreiten. Insbesondere sollen die Klarlacke bei einer Verarbeitungsauslaufzeit von 25 Sekunden nach DIN EN ISO 2431 (DIN ISO-Becher mit 4 mm-Auslaufdüse) einen Festkörpergehalt von > 40 und insbesondere > 45 Gew.-% haben.

Die mit Hilfe der neuen, thermisch härtbaren Einkomponentenbeschichtungsstoffen hergestellten, farb- und/oder effektgebenden Mehrschichtlackierungen sollen die so genannte Automobilqualität aufweisen. Gemäß dem europäischen Patent EP 0 352 298 B1, Seite 15, Zeile 42, bis Seite 17, Zeile 14, bedeutet dies, dass die betreffenden Mehrschichtlackierungen

(1) einen hohen Glanz,
(2) eine hohe Brillanz,
(3) eine hohe Abbildungsunterscheidbarkeit (DOI, distinctiveness of the reflected image),
(4) ein hohes und gleichmäßiges Deckvermögen,
(5) eine einheitliche Trockenschichtdicke,
(6) eine hohe Benzinbeständigkeit,
(7) eine hohe Lösemittelbeständigkeit,
(8) eine hohe Säurebeständigkeit,
(9) eine hohe Härte,
(10) eine hohe Abriebfestigkeit,
(11) eine hohe Kratzfestigkeit,
(12) eine hohe Schlagfestigkeit,
(13) eine hohe Zwischenschichthaftung und Haftung auf dem Substrat und
(14) eine hohe Witterungsstabilität und UV-Beständigkeit
haben. Weitere wesentliche technologische Eigenschaften sind
(15) eine hohe Beständigkeit gegenüber Schwitzwasser,
(16) keine Neigung zum Weißanlaufen und
(17) eine hohe Stabilität gegenüber Baumharz und Vogelkot.

Dabei sollen die Klarlackierungen so wesentliche technologische Eigenschaften wie

(1) Glanz,
(2) Brillanz,
(3) Abbildungsunterscheidbarkeit (DOI, distinctiveness of the reflected image),
(6) Benzinbeständigkeit,

(7) Lösemittelbeständigkeit,
(8) Säurebeständigkeit,
(9) Härte,
(10) Abriebfestigkeit,
(11) Kratzfestigkeit,
(14) Witterungsstabilität und UV-Beständigkeit,
(15) Beständigkeit gegenüber Schwitzwasser,
(16) Beständigkeit gegenüber Weißanlaufen und
(17) Stabilität gegenüber Baumharz und Vogelkot

entscheidend prägen.

Dem gemäß wurden die neuen, thermisch härtbaren Einkomponenten-Beschichtungsstoffe eines Festkörpergehalts von 40 bis 80 Gew.-% und eines elektrischen Widerstands im Bereich von 600 bis 1.300 kΩ gefunden, die aus, jeweils bezogen auf den Beschichtungsstoff,

(A) 18 bis 25 Gew.-%, gerechnet als Feststoff, mindestens eines (Meth)Acrylat(co)polymerisats einer Hydroxylzahl von 80 bis 240 mg KOH/g, einer Säurezahl von 0 bis 40 mg KOH/g, eines zahlenmittleren Molekulargewichts von 1.500 bis 20.000 Dalton, einer Glasübergangstemperatur von -40 bis +80 °C und einem Gehalt an primären Hydroxylgruppen > 50 Äquivalent%, bezogen auf die Gesamtmenge der in (A) vorhandenen Hydroxylgruppen,

(B) 2 bis 7 Gew.-%, gerechnet als Feststoff, mindestens eines Tris(alkoxycarbonylamino)triazins,

(C) 3 bis 8 Gew.-%, gerechnet als Feststoff, mindestens eines mit Pyrazol und/oder mindestens einem substituierten Pyrazol blockierten Polyisocyanats,

(D) 3 bis 9 Gew.-%, gerechnet als Feststoff, mindestens eines wasserlöslichen, reaktiven Melamin-Formaldehyd-Harzes, das einen mittleren bis hohen Alkylierungsgrad und eine mittlere bis hohe Iminofunktionalität aufweist,

(E) 3 bis 9 Gew.-%, gerechnet als Feststoff, mindestens eines wasserunlöslichen, hochreaktiven Melamin-Formaldehyd-Harzes,

(F) 0 bis 40 Gew.-%, gerechnet als Feststoff, mindestens eines Zusatzstoffs und

(G) 20 bis 60 Gew.-% mindestens eines organischen Lösemittels, bestehen und die im Folgenden als »erfindungsgemäße Beschichtungsstoffe« bezeichnet werden.

Außerdem wurde das neue Verfahren zur Herstellung der erfindungsgemäßen Beschichtungsstoffe gefunden, bei dem man die Bestandteile (A) bis (G) miteinander vermischt und die resultierende Mischung homogenisiert und das im Folgenden als »erfindungsgemäßes Verfahren« bezeichnet wird.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Beschichtungsstoffe und mit Hilfe des erfindungsgemäßen Verfahrens gelöst werden konnte.

So wiesen die erfindungsgemäßen Beschichtungsstoffe die Nachteile des Standes der Technik nicht mehr länger auf.

Sie waren in besonders einfacher Weise und hervorragend reproduzierbar herstellbar und insbesondere als Klarlacke zur Herstellung von Klarlackierungen, insbesondere Klarlackierungen von farb- und/oder effektgebenden Mehrschichtlackierungen, verwendbar.

Sie konnten im Technikum unter Bedingungen, die den Praxisbedingungen in der Linie beim Automobilhersteller entsprechen, mit Hilfe moderner Applikationsmethoden, wie das pneumatische Spritzlackieren mit pneumatischen Handspritzpistolen und automatischen Spritzpistolen oder das elektrostatische Spritzlackieren (ESTA) mit Handspritzpistolen oder automatischen Hochrotationsglocken, problemlos in Trockenschichtdicken von 45 µm und mehr ohne Bildung von Läufer und Kocher appliziert werden.

Bei der Applikation wiesen sie einen hohen Festkörpergehalt, vorzugsweise > 40 Gew.-% auf. Dennoch überschritt ihre Verarbeitungsviskosität nicht die von der Lackieranlage gesetzten Grenzen. Insbesondere wiesen sie bei einer Verarbeitungsauslaufzeit von 25 Sekunden nach DIN EN ISO 2431 (DIN ISO-Becher 4 mm-Auslaufdüse) einen Festkörpergehalt von > 45 und insbesondere > 50 Gew.-% auf.

Die mit Hilfe der erfindungsgemäßen Beschichtungsstoffe hergestellten, farb- und/oder effektgebenden Mehrschichtlackierungen wiesen, die so genannte Automobilqualität auf. Gemäß dem europäischen Patent EP 0 352 298 B1, Seite 15, Zeile 42, bis Seite 17, Zeile 14, bedeutet dies, dass die betreffenden Mehrschichtlackierungen

(1) einen hohen Glanz,
(2) eine hohe Brillanz,
(3) eine hohe Abbildungsunterscheidbarkeit (DOI, distinctiveness of the reflected image),
(4) ein hohes und gleichmäßiges Deckvermögen,
(5) eine einheitliche Trockenschichtdicke,
(6) eine hohe Benzinbeständigkeit,
(7) eine hohe Lösemittelbeständigkeit,
(8) eine hohe Säurebeständigkeit,
(9) eine hohe Härte,
(10) eine hohe Abriebfestigkeit,
(11) eine hohe Kratzfestigkeit,
(12) eine hohe Schlagfestigkeit,
(13) eine hohe Zwischenschichthaftung und Haftung auf dem Substrat und
(14) eine hohe Witterungsstabilität und UV-Beständigkeit hatten. Weitere wesentliche technologische Eigenschaften waren
(15) eine hohe Beständigkeit gegenüber Schwitzwasser,
(16) keine Neigung zum Weißanlaufen und
(17) eine hohe Stabilität gegenüber Baumharz und Vogelkot.

Dabei prägten die Klarlackierungen insbesondere so wesentliche technologische Eigenschaften wie

(1) Glanz,
(2) Brillanz,
(3) Abbildungsunterscheidbarkeit (DOI, distinctiveness of the reflected image),
(6) Benzinbeständigkeit,
(7) Lösemittelbeständigkeit,
(8) Säurebeständigkeit,
(9) Härte,
(10) Abriebfestigkeit,
(11) Kratzfestigkeit,
(14) Witterungsstabilität und UV-Beständigkeit,
(15) Beständigkeit gegenüber Schwitzwasser,
(16) Beständigkeit gegenüber Weißanlaufen und
(17) Stabilität gegenüber Baumharz und Vogelkot

ganz entscheidend.

Der erfindungsgemäße Beschichtungsstoff weist einen Festkörpergehalt von 40 bis 80 vorzugsweise 45 bis 70 und insbesondere 50 bis 60 Gew.-% und einen elektrischen Widerstand im Bereich von 600 bis 1.300 und vorzugsweise 800 bis 1.200 kΩ auf.

Unter »Festkörper« ist hier und im Folgenden der Anteil eines erfindungsgemäßen Beschichtungsstoffs zu verstehen, der nach der Applikation und thermischen Härtung die erfindungsgemäße Beschichtung aufbau.

Der erste wesentliche Bestandteil des erfindungsgemäßen Beschichtungsstoffs ist mindestens ein, insbesondere ein, (Meth)Acrylat(co)polymerisat (A), vorzugsweise ein (Meth)Acrylatcopolymerisat (A) und insbesondere ein Methacrylatcopolymerisat (A). Es ist in dem erfindungsgemäßen Beschichtungsstoff, gerechnet als Feststoff, in einer Menge von, jeweils bezogen auf den Beschichtungsstoff, 18 bis 25 und insbesondere 19 bis 24 Gew.-% enthalten. Es weist eine Hydroxylzahl von 80 bis 240, vorzugsweise 100 bis 220 und insbesondere 120 bis 200 mg KOH/g, eine Säurezahl von 0 bis 40, vorzugsweise 3 bis 35 und insbesondere 5 bis 30 mg KOH/g, ein zahlenmittleres Molekulargewicht von 1.500 bis 20.000, vorzugsweise 2.000 bis 15.000 und insbesondere 2.500 bis 14.000 Dalton, eine Glasübergangstemperatur von- 40 bis + 80, vorzugsweise - 35 bis + 75 und insbesondere - 30 bis + 70 °C, sowie einem Gehalt an primären Hydroxylgruppen > 50, vorzugsweise > 55 und insbesondere > 60 Äquivalent%, bezogen auf die Gesamtmenge der in (A) vorhandenen Hydroxylgruppen, auf.

Die (Meth)Acrylat(co)polymerisate (A) enthalten übliche und bekannte hydroxylgruppenhaltige (a1) sowie gegebenenfalls hydroxylgruppenfreie (a2), insbesondere aber hydroxylgruppenhaltige (a1) und hydroxylgruppenfreie (a2), olefinisch ungesättigte Monomere (a) einpolymerisiert.

Beispiele geeigneter hydroxylgruppenhaltiger, olefinisch ungesättigter Monomere (a1) sind die Monomeren

(a11) bis (a14).

Beispiele geeigneter hydroxylgruppenhaltiger olefinisch ungesättigter Monomere (a11) sind Hydroxyalkylester von olefinisch ungesättigten Carbon-, Sulfon- und Phosphonsäuren und sauren Phosphor- und Schwefelsäureestern, insbesondere Carbonsäuren, wie Acrylsäure, beta-Carboxyethylacrylat, Methacrylsäure, Ethacrylsäure und Crotonsäure, insbesondere Acrylsäure und Methacrylsäure.

Die Monomeren (a11) leiten sich von einem Alkylenglykol ab, der mit der Säure verestert ist, oder sie sind durch die Umsetzung der Säure mit einem Alkylenoxid wie Ethylenoxid oder Propylenoxid erhältlich.

Bevorzugt werden die Hydroxyalkylester, in denen die Hydroxyalkylgruppe bis zu 20 Kohlenstoffatome enthält, verwendet als Monomere (a11), insbesondere, 2-Hydroxyethyl- oder 3-Hydroxypropylacrylat oder methacrylat; 4-Hydroxybutyl(meth)acrylat; 2-Alkyl-propan-1,3-diol-mono(meth)acrylate, wie 2-Methyl-, 2-Ethyl-, 2-Propyl-, 2-Isopropyl- oder 2-n-Butyl-propan-1,3-diol-mono(meth)acrylat, insbesondere 2-Methylpropan-1,3-diol-mono(meth)acrylat; 1,4-Bis (hydroxymethyl)cyclohexan- oder Octahydro-4,7-methano-1H-inden-dimethanolmonoacrylat oder - monomethacrylat; oder Umsetzungsprodukte aus cyclischen Estern, wie z.B. epsilon-Caprolacton und diesen Hydroxyalkylestern.

Die Monomeren (a11) können sich auch von Polyolen, wie Trimethylolpropanmono- oder diallylether oder Pentaerythritmono-, -di- oder -triallylether; ableiten. Diese höherfunktionellen Monomeren (a11) werden im allgemeinen nur in untergeordneten Mengen eingesetzt. Hierbei sind unter untergeordneten Mengen an höherfunktionellen Monomeren (a11) solche Mengen zu verstehen, welche nicht zur Vernetzung oder Gelierung der (Meth)Acrylatcopolymerisate (A) führen, es sei denn, sie sollen in der Form von vernetzten Mikrogelteilchen vorliegen.

Als Monomere (a12) kommen Allylalkohol, ethoxylierter und/oder propoxylierter Allylakohol, der oder die von der Firma Arco Chemicals vertrieben wird oder werden, oder 2-Hydroxyalkylallylether, insbesondere 2-Hydroxyethylallylether in Betracht. Sofern verwendet, werden sie vorzugsweise nicht als alleinige Monomere (a1), sondern in einer Menge von 0,1 bis 10 Gew.-%, bezogen auf das (Meth)Acrylatcopolymerisat (A), eingesetzt.

Beispiele geeigneter Monomere (a13) sind Umsetzungsprodukte aus den vorstehend aufgeführten olefinisch ungesättigten Säuren, insbesondere Acrylsäure und/oder Methacrylsäure, mit dem Glycidylester einer in alpha-Stellung verzweigten Monocarbonsäure mit 5 bis 18 Kohlenstoffatomen je Molekül, insbesondere eine Versatic®-Säure, oder - anstelle der Umsetzungsprodukte - eine äquivalenten Menge an den vorstehend aufgeführten olefinisch ungesättigten Säuren, insbesondere Acryl- und/oder Methacrylsäure, die dann während oder nach der Polymerisationsreaktion mit dem Glycidylester einer in alpha-Stellung verzweigen Monocarbonsäure mit 5 bis 18 Kohlenstoffatomen je Molekül, insbesondere einer Versatic®-Säure (vgl. Römpp Lexikon Lacke und Druckfarben, Georg Thieme Verlag, Stuttgart, New York, 1998, »Versatic®-Säurert«, Seiten 605 und 606), umgesetzt wird oder werden.

Beispiele geeigneter Monomere (a14) sind Acryloxysilan-enthaltende Vinylmonomere, die durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure und/oder weiterer hydroxylgruppehaltiger Monomere (a12) und (a13) herstellbar sind.

Vorzugsweise werden die Monomeren (a11), insbesondere die mit primären Hydroxylgruppen, verwendet.

Beispiele geeigneter hydroxylgruppenfreier, olefinisch ungesättigter Monomere (a2) sind die Monomere (a21) bis (a214):

Monomere (a21) sind Monomere, die mindestens eine Säuregruppe pro Molekül tragen, wie

- Acrylsäure, beta-Carboxyethylacrylat, Methacrylsäure, Ethacrylsäure, Crotonsäure, Maleinsäure, Fumarsäure oder Itaconsäure;
- olefinisch ungesättigte Sulfon- oder Phosphonsäuren oder deren Teilester;
- Maleinsäuremono(meth)acryloyloxyethylester, Bernsteinsäuremono(meth)acryloyloxyethylester oder Phthalsäuremono(meth)acryloyloxyethylester; oder
- Vinylbenzoesäure (alle Isomere), alpha-Methylvinylbenzoesäure (alle Isomere) oder Vinylbenzsolsulfonsäure (alle Isomere).

Monomere (a22) sind Monomere mit Amingruppen, wie Aminoethylacrylat, Aminoethylmethacrylat, Allylamin oder N-Methylaminoethylacrylat.

Monomere (a23) sind Monomere mit N-Methylenethergruppen, wie N,N-Di(methoxymethyl)aminoethylacrylat oder -methacrylat oder N,N-Di(butoxymethyl)aminopropylacrylat oder -methacrylat;

Monomere (a24) sind Monomere mit Amidgruppen, wie (Meth)Acrylsäureamide, wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;

Monomere (a25) sind Monomere mit Carbamatgruppen oder Allophanatgruppen, wie Acryloyloxy- oder Methacryloyloxyethyl-, propylder butylcarbamat oder -allophanat; weitere Beispiele geeigneter Monomere, welche Carbamatgruppen enthalten, werden in den Patentschriften US-A-3,479,328, US-A-3,674,838, US-A- 4,126,747, US-A-4,279,833 oder US-A-4,340,497 beschrieben.

Monomere (a26) sind Monomere mit Epoxidgruppen, wie der Glycidylester der Acrylsäure, Methacrylsäure, Ethacrylsäure, Crotonsäure, Maleinsäure, Fumarsäure oder Itaconsäure oder Allylglycidylether.

Monomere (a27) sind von reaktiven funktionellen Gruppen freie oder im wesentlichen freie (Meth)acrylsäureester wie (Meth)Acrylsäurealkyl- oder - cycloalkylester mit bis zu 20 Kohlenstoffatomen im Alkylrest, insbesondere Methyl-, Ethyl-, n-Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-indenmethanol- oder tert.-Butylcyclohexyl(meth)acrylat; (Meth)Acrylsäureoxaalkylester oder -oxacycloalkylester wie Ethoxytriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate (weitere Beispiele geeigneter Monomere (a27) dieser Art sind aus der Offenlegungsschrift DE 196 25 773 A1, Spalte 3, Zeile 65, bis Spalte 4, Zeile 20, bekannt). Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropantri(meth)acrylat; oder Pentaerythrittetra(meth)acrylat, enthalten. Hierbei sind unter untergeordneten Mengen an höherfunktionellen Monomeren (a27) solche Mengen zu verstehen, welche nicht zur Vernetzung oder Gelierung der Copolymerisate führen, es sei denn, sie sollen in der Form von vernetzten Mikrogelteilchen vorliegen.

Monomere (a28) sind Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt. Vinylester dieser Art werden unter der Marke VeoVa® vertrieben (vgl. auch Römpp Lexikon Lacke und Druckfarben, Georg Thieme Verlag, Stuttgart, New York, 1998, Seite 598).

Monomere (a29) sind Diarylethylene, insbesondere solche der allgemeinen Formel I:

$$\mathbf{R^1R^2C{=}CR^3R^4} \qquad (I),$$

worin die Reste $R^1$, $R^2$, $R^3$ und $R^4$ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen $R^1$, $R^2$, $R^3$ und $R^4$ für substituierte oder unsubstituierte Acryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl-cyclohexan. Beispiele geeigneter Cycloalkylalkylreste sind 2-, 3- oder 4-Methyl-, -Ethyl-, -Propyl- oder-Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen-oder Propan-1,3-diyl-benzol. Beispiele geeigneter Cycloalkylarylreste sind 2-, 3-oder 4-Phenylcyclohex-1-yl. Beispiele geeigneter Arylalkylreste sind 2-, 3-oder 4-Methyl-, -Ethyl-, -Propyl- oder -Butylphen-1-yl. Beispiele geeigneter Arylcycloalkylreste sind 2-, 3- oder 4-Cyclohexylphen-1-yl. Vorzugsweise handelt es sich bei den Arylresten $R^1$, $R^2$, $R^3$ und/oder $R^4$ um Phenyl- oder Naphthylreste, insbesondere Phenylreste. Die in den Resten $R^1$, $R^2$, $R^3$ und/oder $R^4$ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; und/oder Arylthio-, Alkylthio- und Cycloalkylthioreste. Besonders vorteilhaft sind Diphenylethylen, Dinaphthalinethylen, cis- oder trans- Stilben oder Vinyliden-bis(4-nitrobenzol), insbesondere Diphenylethylen (DPE), weswegen sie bevorzugt verwendet werden.

Monomere (a210) sind vinylaromatische Kohlenwasserstoffe wie Styrol, Vinyltoluol oder alpha-Alkylstyrole, wie alpha-Methylstyrol.

Monomere (a211) sind Nitrile wie Acrylnitril und/oder Methacrylnitril.

Monomere (a212) sind Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam oder N-Vinylpyrrolidon; 1-Vinylimidazol; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.

Monomere (a213) sind Allylverbindungen, wie Allylether und -ester, insbesondere Allylmethyl-, -ethyl-, -propyl- oder -butylether oder Allylacetat, -propionat oder -butyrat.

Monomere (a214) sind Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A1 auf den Seiten 5 bis 7, der DE 37 06 095 A1 in den Spalten 3 bis 7, der EP 0 358 153 B1 auf den Seiten 3 bis 6, in der US 4,754,014 A1 in den Spalten 5 bis 9, in der DE 44 21 823 A1 oder in der internationalen Patentanmeldung WO 92/22615 auf Seite 12, Zeile 18, bis Seite 18, Zeile 10, beschrieben sind.

Die Monomeren (a1) sowie gegebenenfalls. (a2) werden so ausgewählt, dass die vorstehend angegebenen Hydroxylzahlen, Säurezahlen, Gehalt an primären Hydroxylgruppen und Glasübergangstemperaturen resultieren.

Die Auswahl der Monomeren (a) zur Einstellung der Glasübergangstemperaturen kann vom Fachmann unter Zuhilfenahme der folgenden Formel von Fox, mit der die Glasübergangstemperaturen von Poly(meth)acrylaten näherungsweise berechnet werden können, vorgenommen werden:

$$1/Tg = \sum_{n=1}^{n=x} Wn/Tg_n; \qquad \Sigma_n W_n = 1$$

Tg = Glasübergangstemperatur des Poly(meth)acrylats;
$W_n$ = Gewichtsanteil des n-ten Monomers;
$Tg_n$ = Glasübergangstemperatur des Homopolymers aus dem n-ten Monomer und
x = Anzahl der verschiedenen Monomeren.

Die Herstellung der erfindungsgemäß zu verwendenden (Meth)Acrylatcopolymerisate (A) weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von vorzugsweise 50 bis 200°C.

Beispiele geeigneter Copolymerisationsverfahren werden in den Patentanmeldungen DE 197 09 465 A1, DE 197 09 476 A1, DE 28 48 906 A1, DE 195 24 182 A1, DE 198 28 742 A1, DE 196 28 143 A1, DE 196 28 142 A1, EP 0 554 783 A1, WO 95/27742, WO 82/02387 oder WO 98/02466 beschrieben. Die Copolymerisation kann indes auch in Polyolen als Reaktionsmedium durch geführt werden, wie dies beispielsweise in der deutschen Patentanmeldung DE 198 50 243 A1 beschrieben wird.

Beispiele geeigneter radikalischer Initiatoren sind Dialkylperoxide, wie Di-tert.-Butylperoxid oder Dicumylperoxid; . Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Peroxodicarbonate; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Es können auch Kombinationen der vorstehend beschriebenen Initiatoren eingesetzt werden.

Weitere Beispiele geeigneter Initiatoren werden in der deutschen Patentanmeldung DE 196 28 142 A1, Seite 3, Zeile 49, bis Seite 4, Zeile 6, beschrieben.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,2 bis 20 Gew.-%, ganz besonders bevorzugt 0,5 bis 15 Gew.-% und insbesondere 1,0 bis 10 Gew.-% beträgt.

Des weiteren können Thiocarbonylthio-Verbindungen oder Mercaptane wie Dodecylmercaptan als Kettenübertragungsmittel oder Molekulargewichtsregler verwendet werden.

Der zweite wesentlichen Bestandteil des erfindungsgemäßen Beschichtungsstoffs ist mindestens ein, insbesondere ein, Tris(alkxycarbonylamino)triazin (B). Es ist in dem erfindungsgemäßen Beschichtungsstoff, gerechnet als Feststoff, in einer Menge von 2 bis 7 und insbesondere 2 bis 6 Gew.-%, jeweils bezogen auf den Beschichtungsstoff, enthalten. Gut geeignete Tris(alkoxycarbonylamino)triazine (B) weisen die folgende Formel auf:

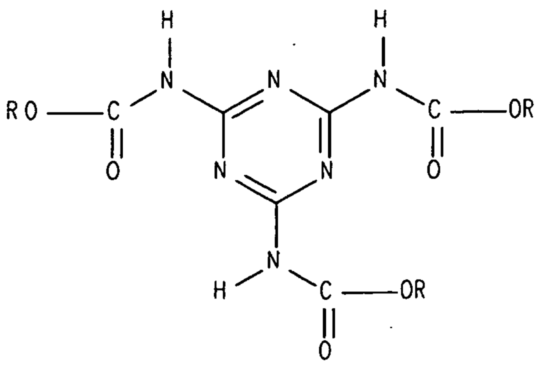

Beispiele geeigneter Tris(alkoxycarbonylamino)triazine werden in den Patentschriften US 4,939,213 A1 oder US 5,084,541 A1 oder der europäischen Patentanmeldung EP 0 624 577 A1 beschrieben. Insbesondere werden die Tris(methoxy-, Tris(butoxy- und/oder Tris(2-ethylhexoxycarbonylamino)triazine verwendet. Von Vorteil sind die Methyl-Butyl-Mischester, die Butyl-2-Ethylhexyl-Mischester und der Butylester.

Der dritte wesentlichen Bestandteil des erfindungsgemäßen Beschichtungsstoffs ist mindestens ein, insbesondere ein, mit Pyrazol und/oder mindestens einem, insbesondere einem, substitiuierten Pyrazol blockiertes Polyisocyanat (C). Vorzugsweise wird ein mit einem substitiuierten Pyrazol blockiertes Polyisocyanat (C) verwendet. Es ist in dem erfindungsgemäßen Beschichtungsstoff, gerechnet als Feststoff, in einer Menge von 2 bis 8 und insbesondere 2 bis 5 gibt, bezogen auf den Beschichtungsstoff, enthalten.

Vorzugsweise wird das substitiuierte Pyrazol aus der Gruppe, bestehend aus in 3-Stellung monosubstituierten, in 3,4- und 3,5-Stellung disubstituierten oder in 3,4;5-Stellung trisubstituierten Pyrazolen, insbesondere in 3,4- und 3,5-Stellung disubstituierten Pyrazolen, ausgewählt. Beispiele geeigneter substitiuierter Pyrazole sind aus der europäischen Patentschrift EP 0 159 117 B1 bekannt. Bevorzugt wird das in 3,4- und 3,5-Stellung disubstitiuierte Pyrazol aus der Gruppe der alkylsubstitiuierten, insbesondere methylsubstituierten, Pyrazole ausgewählt. Besonders bevorzugt wird 3,5-Dimethylpyrazol verwendet.

Als zu blockierende Diisocyanate und Polyisocyanate kommen praktisch alle üblichen und bekannten aromatischen, aliphatischen und cycloaliphatischen Di- und Polyisocyanate, in Betracht. Insbesondere kommen die Diisocyanate und Polyisocyanate in Betracht, die von der Fachwelt als Lackpolyisocyanate bezeichnet werden.

Beispiele geeigneter zu blockierender aromatischer Diisocyanate sind Toluylendiisocyanat, Xylylendiisocyanat, Bisphenylendiisocyanat, Naphthylendiisocyanat oder Diphenylmethandiisocyanat.

Beispiele geeigneter zu blockierender acyclischer aliphatischer Diisocyanate sind Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat, 4-Isocyanatomethyl-1,8-octamethylendiisocyanat, oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentylcyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan.

Beispiele geeigneter cycloaliphatischer Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan Dicyclohexylmethan-2,4'-diisocyanat oder Dicyclohexylmethan-4,4'-diisocyanat.

Beispiele geeigneter zu blockierender Polyisocyanate sind isocyanatgruppenhaltige Polyurethanpräpolymere,

die durch Reaktion von Polyolen mit einem Überschuß der vorstehend beschriebenen aromatischen, aliphatischen und cycloaliphatischen, vorzugsweise aliphatischen und cycloaliphatischen, Diisocyanaten hergestellt werden können und bevorzugt niederviskos sind. Im Rahmen der vorliegenden Erfindung bezeichnet der Begriff "cycloaliphatisches Diisocyanate" ein Diisocyanate, worin mindestens eine Isocyanatgruppe an einen cycloaliphatischen Rest gebunden ist.

Es können auch Isocyanurat-, Biuret-, Allophanat-, Iminooxadiazindion-, Urethan-, Harnstoff-, Carbodiimid und/oder Uretdiongruppen aufweisende Polyisocyanate verwendet werden, die in üblicher und bekannter Weise aus den vorstehend beschriebenen Diisocyanaten hergestellt werden. Beispiele geeigneter Herstellungsverfahren und Polyisocyanate sind beispielsweise aus den Patentschriften und Patentanmeldungen CA 2,163,591 A1, US 4,419,513 A1, US 4,454,317 A1, EP 0 646 608 A1, US 4,801,675 A1, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt.

Insbesondere wird Hexamethylendiisocyanat verwendet.

Der vierte wesentlichen Bestandteil des erfindungsgemäßen Beschichtungsstoffs ist mindestens ein, insbesondere ein, wasserlösliches, reaktives Melamin-Formaldehyd-Harz (D), das einen mittleren bis hohen Alkylierungsgrad und eine mittlere bis hohe Iminofunktionalität aufweist. Es ist in dem erfindungsgemäßen Beschichtungsstoff, gerechnet als Feststoff, in einer Menge von 3 bis 9 und insbesondere 3 bis 8 Gew.-%, jeweils bezogen auf den Beschichtungsstoff, enthalten.

»Reaktiv« bedeutet, dass das Melamin-Formaldehyd-Harz (D) bei der thermischen Vernetzung üblicherweise mit schwachen organischen und/oder anorganischen Säuren katalysiert werden muss. Unter schwachen Säuren werden Säuren mit einem pKs-Wert > 4, insbesondere > 5, verstanden. Beispiele geeigneter schwacher Säuren sind Carbonsäuren, die auch mit Aminen blockiert sein können und erst bei der thermischen Härtung freigesetzt werden. Auch die in den (Meth)Acrylatcopolymerisaten (A) vorliegenden Carboxylgruppen können katalytisch wirken.

Ein mittlerer Alkylierungsgrad bedeutet, dass im statistischen Mittel bis zu 70, vorzugsweise bis zu 65 und insbesondere bis zu 60 Mol-% der vorhandenen Methylolgruppen verethert sind. Ein hoher Alkylierungsgrad bedeutet, dass mindestens 70 Mol-%, insbesondere mindestens 80 Mol-% und inbesondere im wesentlichen alle oder alle Methylolgruppen verethert sind. Dabei können die Ethergruppen Methyl-, Propyl-, Isopropyl-, n-Butyl- oder Isobutylgruppen, insbesondere Methylgruppen, enthalten.

Eine mittlere bis hohe Iminofunktionalität bedeutet, dass das Melamin-Formaldehyd-Harz (D) im statistischen Mittel mehr als 0,5, insbesondere mehr als 0,7 und insbesondere mehr als 0,9 Iminogruppen im Molekül enthält.

Die Melamin-Formaldehyd-Harze (D) sind handelsübliche Produkte. So vertreibt beispielsweise die Firma Cytec Specialty Resins A.S. ein Melamin-Formaldehyd-Harz (D) unter der Marke Cymel® 327.

Der fünfte wesentliche Bestandteil des erfindungsgemäßen Beschichtungsstoffs ist mindestens ein, insbesondere ein, wasserunlösliches, hochreaktives Melamin-Formaldehyd-Harz (E). Es ist in dem erfindungsgemäßen Beschichtungsstoff, gerechnet als Feststoff, in einer Menge von 3 bis 9 und insbesondere 3 bis 8 Gew.-%, jeweils bezogen auf den Beschichtungsstoff, enthalten.

»Hochreaktiv« bedeutet, dass das Melamin-Formaldehyd-Harz (E) an und für sich keine Säuren als Katalysatoren der thermischen Vernetzung benötigt.

Vorzugsweise ist das reaktive Melamin-Formaldehyd-Harz (E) mit Alkylgruppen, insbesondere n-Butylgruppen, alkyliert.

Die Melamin-Formaldehyd-Harze (E) sind handelsübliche Produkte. So vertreibt beispielsweise die Firma BASF Aktiengesellschaft ein Melamin-Formaldehyd-Harz (E) unter der Marke Luwipal ® 018.

Der erfindungsgemäße Beschichtungsstoff kann, jeweils bezogen auf den Beschichtungsstoff, bis zu 40, vorzugsweise 5 bis 35 und insbesondere 5 bis 30 Gew.-% mindestens eines, insbesondere eines, üblichen und bekannten Zusatzstoffes (F), gerechnet als Feststoff, enthalten.

Vorzugsweise wird der Zusatzstoff (F) aus der Gruppe, bestehend aus thermisch härtbaren Reaktiwerdünnern; molekulardispers löslichen Farbstoffen; Lichtschutzmitteln; Antioxidantien; Netzmitteln; Emulgatoren; Antikrateradditiven; Slipadditiven; Katalysatoren für die thermische Vernetzung; thermolabilen radikalischen Initiatoren; Haftvermittlern; Verlaufmitteln; filmbildenden Hilfsmitteln; Rheologiehilfsmitteln; Flammschutzmitteln; Wachsen; Bioziden und Mattierungsmitteln, organischen und anorganischen, transparenten Pigmenten, Füllstoffen und Nanopartikeln, insbesondere Lichtschutzmitteln, Katalysatoren für die thermische Vernetzung, Netzmitteln, Antikrateradditiven, Rheologiehilfsmitteln und transparenten, anorganischen Nanopartikeln, ausgewählt. Das anwendungstechnische Eigenschaftsprofil kann insbesondere durch die Mitverwendung von Katalysatoren für die thermische Vernetzung weiter optimiert werden.

Nicht zuletzt enthält der erfindungsgemäße Beschichtungsstoff mindestens ein organische Lösemittel und vorzugsweise mindestens zwei und insbesondere mindestens drei organische Lösemittel (G) in einer Menge von, jeweils bezogen auf den Beschichtungsstoff, 20 bis 60, vorzugsweise 30 bis 55 und insbesondere 40 bis 50 Gew.-%. Der Fachmann kann geeignete Lösemittel leicht anhand ihres bekannten Lösevermögens auswählen. Beispiele geeigneter Lösemittel sind aus D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, bekannt.

Vorzugsweise werden die erfindungsgemäßen Beschichtungsstoffe mit Hilfe des erfindungsgemäßen Verfahrens hergestellt. Dazu werden die vorstehend beschriebenen Bestandteile (A) bis (G) miteinander vermischt, wonach man die resultierende Mischung homogenisiert. Dabei werden die Bestandteile (A) bis (G) in Mengen eingesetzt, dass die vorstehend beschriebenen Mengenverhältnisse resultieren. Hierfür können die üblichen und bekannten Mischaggregate, wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer, verwendet werden.

Die erfindungsgemäßen Beschichtungsstoffe dienen der Herstellung der erfindungsgemäßen Lackierungen und Beschichtungen auf grundierten oder ungrundierten Substraten. Außerdem kommt sie für alle Verwendungszwecke, die in der internationalen Patentanmeldung WO 99/52964, Seite 12, Zeile 10, bis Seite 14, Zeile 4, beschrieben werden, in Betracht, insbesondere für die Herstellung von optischen Formteilen und selbsttragende Folien.

Als Substrate kommen alle zu lackierenden Oberflächen, die durch eine Härtung der hierauf befindlichen Lackierungen unter Anwendung von Hitze nicht geschädigt werden, in Betracht. Geeignete Substrate bestehen beispielsweise aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Die Oberflächen dieser Materialien können bereits vorlackiert oder vorbeschichtet sein.

Dem gemäß sind die erfindungsgemäßen Beschichtungsstoffe für das Beschichten, insbesondere Lackieren, von Fortbewegungsmitteln, inklusive Fluggeräten, Wasserfahrzeugen, Schienenfahrzeugen, mit Muskelkraft betriebenen Fahrzeugen und Kraftfahrzeugen, insbesondere PKW, und Teilen hiervon, Bauwerken im Innen- und Außenbereich, Türen, Fenstern und Möbeln sowie im Rahmen der industriellen Lackierung für das Beschichten oder Lackieren von Kunststoffteilen, insbesondere transparenten Kunststoffteilen, Kleinteilen, Coils, Container, Emballagen, mechanischen, optischen und elektrotechnischen Bauteilen und weißer Ware sowie für das Beschichten von Hohlglasartikeln besonders gut geeignet.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Beschichtung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) sowie deren Polymerblends oder die mit diesen Kunststoffen hergestellten faserverstärkten Kompositamaterialien lackiert werden

Im Falle von nicht funktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Besondere Vorteile zeigen die erfindungsgemäßen Beschichtungsstoffe und die erfindungsgemäßen Beschichtungen in der Automobilserien- und Reparaturlackierung als Klarlackierungen von höchster Automobilqualität, insbesondere im Rahmen farb- und/oder effektgebender Mehrschichtlackierungen.

Die erfindungsgemäßen Mehrschichtlackierungen können in unterschiedlicher erfindungsgemäßer Weise hergestellt werden.

Eine erste bevorzugte Variante des erfindungsgemäßen Lackierverfahrens umfasst die Verfahrensschritte:

(I) Herstellen einer Basislackschicht durch Applikation eines Wasserbasislacks auf das Substrat,

(II) Trocknen der Basislackschicht,

(III) Herstellen einer Klarlackschicht durch Applikation des erfindungsgemäßen Klarlacks auf die Basislackschicht und

(IV) gemeinsame Härtung der Basislackschicht und der erfindungsgemäßen Klarlackschicht, wodurch die Basislackierung und die erfindungsgemäße Klarlackierung resultieren (Nass-in-nass-Verfahren).

Diese Variante bietet insbesondere bei der Lackierung von Kunststoffen besondere Vorteile und wird deshalb hier besonders bevorzugt angewandt.

Eine zweite bevorzugte Variante des erfindungsgemäßen Lackierverfahrens umfasst die Verfahrensschritte:

(I) Herstellen einer Füllerlackschicht durch Applikation eines Füllers auf das Substrat,

(II) Härtung der Füllerlackschicht, wodurch die Füllerlackierung resultiert,

(III) Herstellen einer Basislackschicht durch Applikation eines Wasserbasislacks auf die Füllerlackierung,

(IV) Trocknen der Basislackschicht,

(V) Herstellen der erfindungsgemäßen Klarlackschicht durch Applikation des erfindungsgemäßen Klarlacks auf die Basislackschicht und

(VI) gemeinsame Härtung der Basislackschicht und der erfindungsgemäßen Klarlackschicht, wodurch die Basislackierung und die erfindungsgemäße Klarlackierung resultieren (Nass-in-nass-Verfahren).

Eine dritte bevorzugte Variante des erfindungsgemäßen Lackierverfahrens umfasst die Verfahrensschritte:

(I) Herstellen einer Füllerlackschicht durch Applikation eines Füllers auf das Substrat,

(II) Trocknung der Füllerlackschicht,

(III) Herstellen einer Basislackschicht durch Applikation eines Wasserbasislacks auf die Füllerlackschicht,

(IV) Trocknen der Basislackschicht,

(V) Herstellen der erfindungsgemäßen Klarlackschicht durch Applikation des erfindungsgemäßen Klarlacks auf die Basislackschicht und

(VI) gemeinsame Härtung der Füllerlackschicht, der Basislackschicht und der erfindungsgemäßen Klarlackschicht, wodurch die Füllerlackierung, die Basislackierung und die erfindungsgemäße Klarlackierung resultieren (erweitertes Nass-in-nass-Verfahren).

Eine vierte bevorzugte Variante des erfindungsgemäßen Lackierverfahrens umfasst die Verfahrensschritte:

(I) Abscheiden einer Elektrotauchlackschicht auf dem Substrat,

(II) Trocknen der Elektrotauchlackschicht,

(II) Herstellen einer ersten Basislackschicht durch Applikation eines ersten Basislacks auf der Elektrotauchlackschicht,

(III) gemeinsame Härtung der Elektrotauchlackschicht und der ersten Basislackschicht, wodurch die Elektrotauchlackierung und die erste Basislackierung resultieren (Nass-in-nass-Verfahren,

(IV) Herstellen einer zweiten Basislackschicht durch Applikation eines zweiten Basislacks auf die erste Basislakkierung,

(V) Trocknen der zweiten Basislackschicht,

(VI) Herstellen der erfindungsgemäßen Klarlackschicht durch Applikation des erfindungsgemäßen Klarlacks auf die Basislackschicht und

(VII) gemeinsame Härtung der zweiten Basislackschicht und der erfindungsgemäßen Klarlackschicht, wodurch die zweite Basislackierung und die erfindungsgemäße Klarlackierung resultieren (Nass-in-nass-Verfahren).

Die drei letztgenannten Varianten bieten insbesondere bei der Erstlackierung von Automobilkarosserien besondere Vorteile und werden deshalb hier ganz besonders bevorzugt angewandt.
Es ist ganz besonderer Vorteil der aus den erfindungsgemäßen Klarlacken hergestellten Beschichtungen, dass sie auch auf bereits ausgehärteten Elektrotauchlackierungen, Füllerlackierungen, Basislackierungen oder üblichen und bekannten Klarlackierungen hervorragend haften.
Die Applikation der efindungsgemäßen Beschichtungsstoffe kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch

das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation oder elektrostatischer Sprühauftrag (ESTA).

Die für die Applikation verwendete Spritzkabine kann beispielsweise mit einem gegebenenfalls temperierbaren Umlauf betrieben werden, der mit einem geeigneten Absorptionsmedium für den Overspray, z. B. den erfindungsgemäßen Beschichtungsstoffen selbst, betrieben wird.

Im allgemeinen werden die Elektrotauchlackschicht, Füllerlackschicht, Basislackschicht und Klarlackschicht in einer Nassschichtdicke appliziert, dass nach ihrer Aushärtung Schichten mit der für ihre Funktionen notwendigen und vorteilhaften Schichtdicken resultieren. Im Falle der Elektrotauchlackierung liegt diese Schichtdicke bei 10 bis 70, vorzugsweise 10 bis 60, besonders bevorzugt 15 bis 50 und insbesondere 15 bis 45 μm; im Falle der Füllerlackierung liegt sie bei 10 bis 150, vorzugsweise 10 bis 120, besonders bevorzugt 10 bis 100 und insbesondere 10 bis 90 μm; im Falle der Basislackierung liegt sie bei 5 bis 50, vorzugsweise 5 bis 40, besonders bevorzugt 5 bis 30 und insbesondere 10 bis 25 μm; und im Falle der erfindungsgemäßen Klarlackierungen liegt sie bei 10 bis 100, vorzugsweise 15 bis 80, besonders bevorzugt 20 bis 70 und insbesondere 25 bis 60 μm. Es kann aber auch der aus der europäischen Patentanmeldung EP 0 817 614 A1 bekannte Mehrschichtaufbau aus einer Elektrotauchlackierung, einer ersten Basislackierung, einer zweiten Basislackierung und einer Klarlackierung angewandt werden, worin die Gesamtschichtdicke der ersten und zweiten Basislackierung bei 15 bis 40 μm liegt und die Schichtdicke der ersten Basislackierung 20 bis 50% der besagten Gesamtschichtdicke beträgt.

Die Füllerlackschicht, Basislackschicht und erfindungsgemäße Klarlackschicht können thermisch gehärtet werden.

Die Aushärtung kann nach einer gewissen Ruhezeit erfolgen. Sie kann eine Dauer von 30 s bis 2 h, vorzugsweise 1 min bis 1h und insbesondere 1 min bis 45 min haben: Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10 g Wasser/kg Luft, insbesondere < 5 g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Geeignete Verfahren dieser Art werden beispielsweise von Roger Talbert in Industrial Paint & Powder, 04/01, Seiten 30 bis 33, »Curing in Seconds with NIR«, oder in Galvanotechnik, Band 90 (11), Seiten 3098 bis 3100, »Lackiertechnik, NIR-Trocknung im Sekundentakt von Flüssig- und Pulverlacken«, beschrieben.

Vorteilhafterweise erfolgt die thermische Härtung bei einer Temperatur von 50 bis 200 °C, besonders bevorzugt 60 bis 190 °C und insbesondere 80 bis 180 ° C während einer Zeit von 1 min bis zu 2 h, besonders bevorzugt 2 min bis zu 1 h und insbesondere 3 min bis 45 min.

Die erfindungsgemäßen Mehrschichtlackierungen sind von höchster Automobilqualität. Demzufolge weisen die erfindungsgemäßen grundierten oder ungrundierten Substrate, die mit mindestens einer erfindungsgemäßen Beschichtung beschichtet sind, bei einem besonders vorteilhaften anwendungstechnischen Eigenschaftsprofil eine besonders lange Gebrauchsdauer auf, was sie wirtschaftlich, ästhetisch und technisch besonders wertvoll macht.

**Beispiele und Vergleichsversuche**

**Beispiele 1 bis 6 und Vergleichsversuche V 1 und V 2**

**Die Herstellung der Klarlacke 1 bis 6 und der Klarlackierungen 1 bis 6 (Beispiele 1 bis 6) und der Klarlacke V 1 und V 2 und der Klarlackierungen V 1 und V 2 (Vergleichsversuche V 1 und V 2)**

Die Klarlacke 1 bis 6 (Beispiele 1 bis 6) und V 1 und V 2 (Vergleichsversuche V 1 und V 2) wurden durch Vermischen der in der Tabelle aufgeführten Bestandteile und Homogenisieren der resultierenden Mischungen hergestellt.

Wie der Vergleich der in der Tabelle aufgeführten Werte zeigt, besaßen nur die Klarlacke 1 bis 6, insbesondere die Klarlacke 4, 5 und 6, bei einem Applikationsfestkörper > 50 Gew.-%, insbesondere > 55 Gew.-%, einen Widerstand im Bereich von 600 bis 1.300 kΩ, insbesondere 920 bis 980 kΩ.

**Tabelle: Zusammensetzung und Eigenschaften der Klarlacke 1 bis 6 (Beispiele 1 bis 6) und V 1 und V 2 (Vergleichsversuche V 1 und V 2)**

| Bestandteil | Klarlacke | | | | | | | |
|---|---|---|---|---|---|---|---|---|
| | 1 | 2 | 3 | 4 | 5 | 6 | V1 | V2 |
| (A) a) | 19,83. | 19,93 | 19,76 | 20,93 | 20,93 | 20,93 | 20,08 | 19,59 |
| (B) b) | 4,74 | 4,76 | 4,72 | 5 | 5 | 5 | 4,8 | 4,68 |
| (C) c) | 3,55 | 3,57 | 3,54 | 3,75 | 3,75 | 3,75 | 3,6 | 3,51 |
| (D) d) | 5,46 | 7,28 | 3,6 | 5,76 | 5,76 | 5,76 | 11,05 | - |
| (E) e) | 5,45 | 3,66 | 7,22 | 5,77 | 5,77 | 5,77 | - | 10,81 |
| (F): | | | | | | | | |
| SCA f) | 8,53 | 8,57 | 8,5 | 9 | 9 | 9 | 8,63 | 8,42 |
| Tin.292 g) | 1,13 | 1,14 | 1,13 | 1,2 | 1,2 | 1,2 | 1,15 | 1,12 |
| Tin. 384 h) | 1,42 | 1,43 | 1,41 | 1,5 | 1,5 | 1,5 | 1,44 | 1,4 |
| Aerosil i) | 2,7 | 2,71 | 2,69 | 2,5 | 2,5 | 2,5 | 2,73 | 2,67 |
| NetzM. j) | 0,06 | 0,06 | 0,06 | 0,07 | 0,07 | 0,07 | 0,06 | 0,06 |
| Kat. k) | 0,02 | 0,02 | 0,02 | 0,02 | 0,02 | 0,02 | 0,02 | 0,02 |
| Festkörper l) (Gew.-%) | 52,89 | 53,13 | 52,65 | 55,85 | 55,85 | 55,85 | 53,56 | 52,28 |
| (G) m) | 47,13 | 46,89 | 47,37 | 44,71 | 44,71 | 44,71 | 46,46 | 47,74 |
| Widerstand (kΩ) | 780 | 660 | 960 | 980 | 760 | 920 | 470 | 1.500 |

a) Methacrylatcopolymerisat (A), bestehend aus den folgenden einpolymerisierten Monomeren (a1) und (a2): 18 Gew.-% 2-Ethylhexylacrylat, 15 Gew.-% n-Butylmethacrylat, 30 Gew.-% Styrol, 36 Gew.-% 2-Hydroxyethylacrylat und 1 Gew.-% Acrylsäure; Glasübergangstemperatur 8,93 °C, Hydroxylzahl 174 mg KOH/g; Säurezahl 8,8 mg KOH/g;
b) Tris(butoxycarbonylamino)triazin (B);
c) mit 3,5-Dimethylpyrazol blockiertes Hexamethylendiisocyanat (C);
d) wasserlösliches, reaktives Melamin-Formaldehyd-Harz (D) (Cymel ® 327 der Firma Cytec);
e) wasserunlösliches, hochreaktives Melamin-Formaldehyd-Harz (E) (Luwipal ® 018 der Firma BASF Aktiengesellschaft);
f) SCA = Sag Control Agent; Gemisch aus 55 Gewichtsteilen eines Methacrylatcopolymerisats aus den folgenden einpolymerisierten Monomeren: 1,4 Gew.-% Methacrylat MA 13, 34,8 Gew.-% n-Butylacrylat, 40 Gew.-% Styrol, 21,6 Gew.-% 2-Hydroxyethylacrylat und 2,2 Gew.-% Methacrylsäure; 4 Gewichtsteilen des Diharnstoffs aus Benzylamin und Hexamethylendiisocyanat;
g) Tin.292 = Tinuvin ® 292, Lichtschutzmittel vom HALS-Typ der Firma Ciba Specialty Chemicals;
h) Tin.384 = Tinuvin ® 384, Lichtschutzmittel der Firma Ciba Specialty Chemicals;
i) Aerosil = Aerosil ®, pyrogenes Siliziumdioxid der Firma Degussa;
j) NetzM. = Netzmittel Baysilon ® OL 44 der Firma Bayer AG;
k) Kat. = handelsüblicher Katalysator der thermischen Vernetzung (aminblockierte p-Toluolsulfonsäure; Cycat ® 4045)
l) Festkörper bei der Applikation; Verarbeitungsauslaufzeit des Klarlacks: 25 Sekunden nach DIN EN ISO 2431 (DIN ISO-Becher 4 mm-Auslaufdüse);
m) G = Lösemittelgemisch aus Butylacetat 98/100, Ethoxyethylpropionat, Solventnaphtha ®, Isobutanol und n-Butanol.

Zur Herstellung der Klarlackierungen 1 bis 6 (Beispiele 1 bis 6) und der Klarlackierungen V 1 und V 2 (Vergleichsversuche V 1 und V 2) wurden Stahltafeln nacheinander mit einer kathodisch abgeschiedenen und während 20 Minuten bei 170 °C eingebrannten Elektrotauchlackierung einer Trockenschichtdicke von 18 bis 22 µm beschichtet. Anschließend wurden die Stahltafeln mit einem handelsüblichen Zweikomponenten-Wasserfüller von BASF Coatings AG, wie er üblicherweise für Kunststoffsubstrate verwendet wird, beschichtet. Die resultierende Füllerschicht wurde während 30 Minuten bei 90 °C eingebrannt, so dass eine Trockenschichtdicke von 35 bis 40 µm resultierte. Hiernach wurde ein handelsüblicher schwarzer Wasserbasislack von BASF Coatings AG mit einer Schichtdicke von 12 bis 15 µm appliziert, wonach die resultierenden Wasserbasislackschichten während zehn Minuten bei 80 °C abgelüftet wurden.

Anschließend wurden die Klarlacke 1 bis 6 und V 1 und V 2 in einem Kreuzgang mit einer ESTA-Handspritzpistole der Firma Ransberg appliziert, so dass eine Trockenschichtdicke von 40 bis 45 μm resultierte.

Die Applikation erfolgte bei einer Kabinentemperatur von 23 ± 3 °C, einer Materialtemperatur von 23 ± 3 °C und einer relativen Luftfeuchte von 60 ± 10%. Die resultierenden Klarlackschichten wurden während 5 Minuten bei Kabinentemperatur abgelüftet. Anschließend wurden sie gemeinsam mit den Wasserbasislackschichten während 20 Minuten bei 140 ± 5 °C eingebrannt.

Es zeigte sich, dass sich nur die Klarlacke 1 bis 6 problemlos applizieren ließen und Klarlackierungen einer Trockenschichtdicke von 45 μm, die keine Oberflächenstörungen wie Läufer oder Krater aufwiesen, lieferten.

Dabei besaßen die Klarlackierungen 4 bis 6 den besten Verlauf und den besten optischen Gesamteindruck (Appearance).

Im Gegensatz zu den Klarlackierungen V 1 und V 2 zeigten die Klarlackierungen 1 bis 6 in der Kondenswasser-Klimaprüfung nach DIN 50017 kein Weißanlaufen.

Die Klarlackierungen 1 bis 6, insbesondere die Klarlackierungen 4 bis 6, waren den Klarlackierungen V 1 und V 2 in der Chemikalienbeständigkeit, insbesondere in der Beständigkeit gegenüber Batteriesäure, überlegen.

Die Klarlackierungen 1 bis 6 zeigten auch einen geringeren Glanzverlust als die Klarlackierungen V 1 und V 2 nach der Belastung in einer Laborwaschstraße der Firma Amtec Kistler (vgl. T. Klimmasch, T. Engbert, Technologietage, Köln, DFO, Berichtsband 32, Seiten 59 bis 66,1997).

Insgesamt hatten die farbgebenden Mehrschichtlackierungen, die die Klarlackierungen 1 bis 6, insbesondere die Klarlackierungen 4 bis 6, aufwiesen, die für die Anwendung im Automobilbereich erforderliche Automobilqualität.

## Patentansprüche

1. Thermisch härtbare Einkomponenten-Beschichtungsstoffe eines Festkörpergehalts von 40 bis 80 Gew.-% und eines elektrischen Widerstands im Bereich von 600 bis 1.300 kΩ, bestehend aus, jeweils bezogen auf den Beschichtungsstoff,

    (A) 18 bis 25 Gew.-%, gerechnet als Feststoff, mindestens eines (Meth)Acrylat(co)polymerisats einer Hydroxylzahl von 80 bis 240 mg KOH/g, einer Säurezahl von 0 bis 40 mg KOH/g, eines zahlenmittleren Molekulargewichts von 1.500 bis 20.000 Dalton, einer Glasübergangstemperatur von -40 bis +80 °C und einem Gehalt an primären Hydroxylgruppen > 50 Äquivalent%, bezogen auf die Gesamtmenge der in (A) vorhandenen Hydroxylgruppen,
    (B) 2 bis 7 Gew.-%, gerechnet als Feststoff, mindestens eines Tris(alkoxycarbonylamino)triazins,
    (C) 2 bis 8 Gew.-%, gerechnet als Feststoff, mindestens eines mit Pyrazol und/oder mindestens einem substituierten Pyrazol blockierten Polyisocyanats,
    (D) 3 bis 9 Gew.-%, gerechnet als Feststoff, mindestens eines wasserlöslichen, reaktiven Melamin-Formaldehyd-Harzes, das einen mittleren bis hohen Alkylierungsgrad und eine mittlere bis hohe Iminofunktionalität aufweist,
    (E) 3 bis 9 Gew.-%, gerechnet als Feststoff, mindestens eines wasserunlöslichen, hochreaktiven Melamin-Formaldehyd-Harzes,
    (F) 0 bis 40 Gew.-%, gerechnet als Feststoff, mindestens eines Zusatzstoffs und
    (G) 20 bis 60 Gew.-% mindestens eines organischen Lösemittels.

2. Beschichtungsstoffe nach Anspruch 1, **dadurch gekennzeichnet, dass** der elektrische Widerstand 800 bis 1.200 kΩ beträgt.

3. Beschichtungsstoffe nach Anspruch 2, **dadurch gekennzeichnet, dass** der Festkörpergehalt 50 bis 60 Gew.-% beträgt.

4. Beschichtungsstoffe nach einem der Ansprüche 1 bis 3, **dadurch gekennzeichnet, dass** sie das (Meth)Acrylat (co)polymerisat (A) in einer Menge von 19 bis 24 Gew.-%, bezogen auf den Beschichtungsstoff, enthalten.

5. Beschichtungsstoffe nach einem der Ansprüche 1 bis 4, **dadurch gekennzeichnet, dass** sie das Tris(alkoxycarbonylamino)triazin (B) in einer Menge von 2 bis 6 Gew.-%, bezogen auf den Beschichtungsstoff, enthalten.

6. Beschichtungsstoffe nach einem der Ansprüche 1 bis 5, **dadurch gekennzeichnet, dass** sie das blockierte Polyisocyanat (C) in einer Menge von 2 bis 5 Gew.-%, bezogen auf den Beschichtungsstoff, enthalten.

7. Beschichtungsstoffe nach einem der Ansprüche 1 bis 6, **dadurch gekennzeichnet, dass** das substitiuierte Pyrazol aus der Gruppe, bestehend aus in 3-Stellung monosubstituierten, in 3,4- und 3,5-Stellung disubstituierten oder in 3,4,5-Stellung trisubstituierten Pyrazolen, ausgewählt ist.

8. Beschichtungsstoffe nach Anspruch 7, **dadurch gekennzeichnet, dass** das substitiuierte Pyrazol aus der Gruppe, bestehend aus in 3,4- und 3,5-Stellung disubstituierten Pyrazolen, ausgewählt ist.

9. Beschichtungsstoffe nach Anspruch 8, **dadurch gekennzeichnet, dass** das substitiuierte Pyrazol aus der Gruppe, bestehend aus 3,4- und 3,5-Dimethylpyrazol, ausgewählt ist.

10. Beschichtungsstoffe nach Anspruch 9, **dadurch gekennzeichnet, dass** das Pyrazol 3,5-Dimethylpyrazol ist.

11. Beschichtungsstoffe nach einem der Ansprüche 1 bis 9, **dadurch gekennzeichnet, dass** sie das reaktive Melamin-Formaldehyd-Harz (D) in einer Menge von 3 bis 8 Gew.-%, bezogen auf den Beschichtungsstoff, enthalten.

12. Beschichtungsstoffe nach Anspruch 11, **dadurch gekennzeichnet, dass** das reaktive Melamin-Formaldehyd-Harz (D) mit schwachen organischen und/oder anorganischen Säuren mit einem pKs-Wert > 4, insbesondere > 5, katalysierbar ist.

13. Beschichtungsstoffe nach einem der Ansprüche 1 bis 11, **dadurch gekennzeichnet, dass** der mittlere Alkylierungsgrad des reaktiven Melamin-Formaldehyd-Harzes (D) im statistischen Mittel bei bis zu 70, vorzugsweise bis zu 65 und insbesondere bis zu 60 Äquivalent% der in (D) vorhandenen Methylolgruppen und der hohe Alkylierungsgrad des reaktiven Melamin-Formaldehyd-Harzes (D) im statistischen Mittel bei mindestens 70, vorzugsweise mindestens 80 und insbesondere 100 Äquivalent% der in (D) vorhandenen Methylolgruppen liegt.

14. Beschichtungsstoffe nach einem der Ansprüche 1 bis 13, **dadurch gekennzeichnet, dass** das reaktive Melamin-Formaldehyd-Harz (D) mit Alkylgruppen, ausgewählt aus der Gruppe, bestehend aus Methyl-, Propyl-, Isopropyl-, n-Butyl- oder Isobutylgruppen, insbesondere Methylgruppen, alkyliert ist.

15. Beschichtungsstoffe nach einem der Ansprüche 1 bis 14, **dadurch gekennzeichnet, dass** sie das hochreaktive Melamin-Formaldehyd-Harz (E) in einer Menge von 3 bis 8 Gew.-%, bezogen auf den Beschichtungsstoff, enthalten.

16. Beschichtungsstoffe nach einem der Ansprüche 1 bis 15, **dadurch gekennzeichnet, dass** das hochreaktive Melamin-Formaldehyd-Harz (E) mit Butylgruppen alkyliert ist.

17. Beschichtungsstoffe nach einem der Ansprüche 1 bis 16, **dadurch gekennzeichnet, dass** sie 5 bis 30 Gew.-%, bezogen auf den Beschichtungsstoff, mindestens eines Zusatzstoffs enthalten.

18. Beschichtungsstoffe nach einem der Ansprüche 1 bis 17, **dadurch gekennzeichnet, dass** der Zusatzstoff (F) aus der Gruppe, bestehend aus thermisch härtbaren Reaktivverdünnern; molekulardispers löslichen Farbstoffen; Lichtschutzmitteln; Antioxidantien; Netzmitteln; Emulgatoren; Antikrateradditiven; Slipadditiven; Katalysatoren für die thermische Vernetzung; thermolabilen radikalischen Initiatoren; Haftvermittlern; Verlaufmitteln; filmbildenden Hilfsmitteln; Rheologiehilfsmitteln; Flammschutzmitteln; Wachsen; Bioziden und Mattierungsmitteln, organischen und anorganischen, transparenten Pigmenten, Füllstoffen und Nanopartikeln, ausgewählt ist.

19. Beschichtungsstoffe nach Anspruch 18, **dadurch gekennzeichnet, dass** der Zusatzstoff aus der Gruppe, bestehend aus Lichtschutzmitteln, Netzmitteln, Antikrateradditiven, Rheologiehilfsmitteln und transparenten, anorganischen Nanopartikeln, ausgewählt ist.

20. Beschichtungsstoffe nach einem der Ansprüche 1 bis 19, **dadurch gekennzeichnet, dass** sie das Lösemittel in einer Menge von 30 bis 55 Gew.-%, bezogen auf den Beschichtungsstoff, enthalten.

21. Beschichtungsstoffe nach einem der Ansprüche 1 bis 20, **dadurch gekennzeichnet, dass** sie das Lösemittel in einer Menge von 40 bis 50 Gew.-%, bezogen auf den Beschichtungsstoff, enthalten.

22. Verfahren zur Herstellung von thermisch härtbaren Einkomponenten-Beschichtungsstoffen gemäß einem der Ansprüche 1 bis 21, **dadurch gekennzeichnet, dass** man die Bestandteile (A) bis (G) miteinander vermischt und die resultierende Mischung homogenisiert.

**23.** Verwendung der thermisch härtbaren Einkomponenten-Beschichtungsstoffe gemäß einem der Ansprüche 1 bis 21 und der nach dem Verfahren gemäß Anspruch 22 hergestellten thermisch härtbaren Einkomponenten-Beschichtungsstoffe als Klarlacken zur Herstellung von Klarlackierungen.

**24.** Verwendung nach Anspruch 23, **dadurch gekennzeichnet, dass** die Klarlackierungen die Klarlackierungen von farb- und/oder effektgebenden Mehrschichtlackierungen sind.

**Claims**

**1.** Thermally curable one-component coating materials having a solids content of from 40 to 80% by weight and an electrical resistance in the range from 600 to 1300 kΩ, composed of, based in each case on the coating material,

(A) from 18 to 25% by weight, calculated as solids, of at least one (meth)acrylate (co)polymer with a hydroxyl number of from 80 to 240 mg KOH/g, an acid number of from 0 to 40 mg KOH/g, a number-average molecular weight of from 1500 to 20,000 daltons, a glass transition temperature of from -40 to +80°C, and a primary hydroxyl group content > 50 equivalent %, based on the total amount of hydroxyl groups present in (A),
(B) from 2 to 7% by weight, calculated as solids, of at least one tris(alkoxycarbonylamino)-triazine,
(C) from 2 to 8% by weight, calculated as solids, of at least one polyisocyanate blocked with pyrazole and/or with at least one substituted pyrazole,
(D) from 3 to 9% by weight, calculated as solids, of at least one water-soluble, reactive melamine-formaldehyde resin having a moderate to high degree of alkylation and a moderate to high imino functionality,
(E) from 3 to 9% by weight, calculated as solids, of at least one water-insoluble, high-reactivity melamine-formaldehyde resin,
(F) from 0 to 40% by weight, calculated as solids, of at least one additive, and
(G) from 20 to 60% by weight of at least one organic solvent.

**2.** Coating materials according to Claim 1, **characterized in that** the electrical resistance is from 800 to 1200 kΩ.

**3.** Coating materials according to Claim 2, **characterized in that** the solids content is from 50 to 60% by weight.

**4.** Coating materials according to any of Claims 1 to 3, **characterized in that** they comprise the (meth)acrylate (co) polymer (A) in an amount of from 19 to 24% by weight, based on the coating material.

**5.** Coating materials according to any of Claims 1 to 4, **characterized in that** they comprise the tris(alkoxycarbonylamino)triazine (B) in an amount of from 2 to 6% by weight, based on the coating material.

**6.** Coating materials according to any of Claims 1 to 5, **characterized in that** they comprise the blocked polyisocyanate (C) in an amount of from 2 to 5% by weight, based on the coating material.

**7.** Coating materials according to any of Claims 1 to 6, **characterized in that** the substituted pyrazole is selected from the group consisting of pyrazoles monosubstituted in position 3, pyrazoles disubstituted in 3,4 or 3,5 position, and pyrazoles trisubstituted in 3,4,5 position.

**8.** Coating materials according to Claim 7, **characterized in that** the substituted pyrazole is selected from the group consisting of 3,4- and 3,5-disubstituted pyrazoles.

**9.** Coating materials according to Claim 8, **characterized in that** the substituted pyrazole is selected from the group consisting of 3,4- and 3,5-dimethylpyrazole.

**10.** Coating materials according to Claim 9, **characterized in that** the pyrazole is 3,5-dimethylpyrazole.

**11.** Coating materials according to any of Claims 1 to 9, **characterized in that** they comprise the reactive melamine-formaldehyde resin (D) in an amount of from 3 to 8% by weight, based on the coating material.

**12.** Coating materials according to Claim 11, **characterized in that** the reactive melamine-formaldehyde resin (D) can be catalyzed with weak organic and/or inorganic acids having a $pK_a > 4$, in particular > 5.

**13.** Coating materials according to any of Claims 1 to 11, **characterized in that** the moderate degree of alkylation of the reactive melamine-formaldehyde resin (D) is on average up to 70, preferably up to 65, and in particular up to 60 equivalent% of the methylol groups present in (D) and the high degree of alkylation of the reactive melamine-formaldehyde resin (D) is on average at least 70, preferably at least 80 and in particular 100 equivalent% of the methylol groups present in (D).

**14.** Coating materials according to any of Claims 1 to 13, **characterized in that** the reactive melamine-formaldehyde resin (D) is alkylated with alkyl groups selected from the group consisting of methyl, propyl, isopropyl, n-butyl, and isobutyl groups, especially methyl groups.

**15.** Coating materials according to any of Claims 1 to 14, **characterized in that** they comprise the high-reactivity melamine-formaldehyde resin (E) in an amount of from 3 to 8% by weight, based on the coating material.

**16.** Coating materials according to any of Claims 1 to 15, **characterized in that** the high-reactivity melamine-formaldehyde resin (E) is alkylated with butyl groups.

**17.** Coating materials according to any of Claims 1 to 16, **characterized in that** they comprise from 5 to 30% by weight, based on the coating material, of at least one additive.

**18.** Coating materials according to any of Claims 1 to 17, **characterized in that** the additive (F) is selected from the group consisting of thermally curable reactive diluents; molecularly dispersely soluble dyes; light stabilizers; antioxidants; wetting agents; emulsifiers; anticrater additives; slip additives; thermal crosslinking catalysts; thermolabile free-radical initiators; adhesion promoters; leveling agents; film-forming auxiliaries; rheological assistants; flame retardants; waxes; biocides and flatting agents, organic and inorganic, transparent pigments, fillers and nanoparticles.

**19.** Coating materials according to Claim 18, **characterized in that** the additive is selected from the group consisting of light stabilizers, wetting agents, anticrater additives, rheological assistants and transparent inorganic nanoparticles.

**20.** Coating materials according to any of Claims 1 to 19, **characterized in that** they comprise the solvent in an amount of from 30 to 55% by weight, based on the coating material.

**21.** Coating materials according to any of Claims 1 to 20, **characterized in that** they comprise the solvent in an amount of from 40 to 50% by weight, based on the coating material.

**22.** Process for preparing thermally curable one-component coating materials according to any of Claims 1 to 21, **characterized in that** constituents (A) to (G) are mixed with one another and the resulting mixture is homogenized.

**23.** Use of the thermally curable one-component coating materials according to any of Claims 1 to 21 and of the thermally curable one-component coating materials prepared by the process according to Claim 22 as clearcoat materials for producing clearcoats.

**24.** Use according to Claim 23, **characterized in that** the clearcoats are the clearcoats of multicoat color and/or effect paint systems.

## Revendications

**1.** Substances de revêtement à un composant, thermodurcissables, présentant une teneur en solides de 40 à 80% en poids et une résistance électrique dans la plage de 600 à 1300 kΩ, constituées par, à chaque fois par rapport à la substance de revêtement,

(A) 18 à 25% en poids, calculé sous forme de solide, d'au moins un (co)polymère de (méth)acrylate présentant un indice d'hydroxyle de 80 à 240 mg KOH/g, un indice d'acide de 0 à 40 mg KOH/g, un poids moléculaire numérique moyen de 1500 à 20 000 Daltons, une température de transition vitreuse de -40 à +80°C et une teneur en groupes hydroxyle primaires > 50 équivalents en %, par rapport à la quantité totale des groupes hydroxyle présents dans (A),

(B) 2 à 7% en poids, calculé sous forme de solide, d'au moins une tris(alcoxycarbonylamino)triazine,
(C) 2 à 8% en poids, calculé sous forme de solide, d'au moins un polyisocyanate bloqué par du pyrazole et/ou au moins un pyrazole substitué,
(D) 3 à 9% en poids, calculé sous forme de solide, d'au moins une résine de mélamine-formaldéhyde soluble dans l'eau, réactive, qui présente un degré d'alkylation moyen à élevé et une fonctionnalité imino moyenne à élevée,
(E) 3 à 9% en poids, calculé sous forme de solide, d'au moins une résine de mélamine-formaldéhyde insoluble dans l'eau, hautement réactive,
(F) 0 à 40% en poids, calculé sous forme de solide, d'au moins un additif et
(G) 20 à 60% en poids d'au moins un solvant organique.

2. Substances de revêtement selon la revendication 1, **caractérisées en ce que** la résistance électrique est de 800 à 1200 KΩ.

3. Substances de revêtement selon la revendication 2, **caractérisées en ce que** la teneur en solides est de 50 à 60% en poids.

4. Substances de revêtement selon l'une quelconque des revendications 1 à 3, **caractérisées en ce qu'**elles contiennent le (co)polymère de (méth)acrylate (A) en une quantité de 19 à 24% en poids, par rapport à la substance de revêtement.

5. Substances de revêtement selon l'une quelconque des revendications 1 à 4, **caractérisées en ce qu'**elles contiennent la tris(alcoxycarbonylamino)triazine (B) en une quantité de 2 à 6% en poids, par rapport à la substance de revêtement.

6. Substances de revêtement selon l'une quelconque des revendications 1 à 5, **caractérisées en ce qu'**elles contiennent le polyisocyanate bloqué (C) en une quantité de 2 à 5% en poids, par rapport à la substance de revêtement.

7. Substances de revêtement selon l'une quelconque des revendications 1 à 6, **caractérisées en ce que** le pyrazole substitué est choisi dans le groupe constitué par les pyrazoles monosubstitués en 3ème position, disubstitués en position 3,4 et 3,5 ou trisubstitués en position 3,4,5.

8. Substances de revêtement selon la revendication 7, **caractérisées en ce que** le pyrazole substitué est choisi dans le groupe constitué par les pyrazoles disubstitués en position 3,4 et 3,5.

9. Substances de revêtement selon la revendication 8, **caractérisées en ce que** le pyrazole substitué est choisi dans le groupe constitué par le 3,4-diméthylpyrazole et le 3,5-diméthylpyrazole.

10. Substances de revêtement selon la revendication 9, **caractérisées en ce que** le pyrazole est le 3,5-diméthylpyrazole.

11. Substances de revêtement selon l'une quelconque des revendications 1 à 9, **caractérisées en ce qu'**elles contiennent la résine de mélamine-formaldéhyde réactive (D) en une quantité de 3 à 8% en poids, par rapport à la substance de revêtement.

12. Substances de revêtement selon la revendication 11, **caractérisées en ce que** la résine de mélamine-formaldéhyde réactive (D) peut être catalysée par des acides organiques et/ou inorganiques faibles présentant une valeur pKs > 4, en particulier > 5.

13. Substances de revêtement selon l'une quelconque des revendications 1 à 11, **caractérisées en ce que** le degré d'alkylation moyen de la résine de mélamine-formaldéhyde réactive (D) est en moyenne statistique de jusqu'à 70, de préférence jusqu'à 65 et en particulier jusqu'à 60 équivalents en % des groupes méthylol présents dans (D) et le degré d'alkylation élevé de la résine de mélamine-formaldéhyde réactive (D) est en moyenne statistique d'au moins 70, de préférence d'au moins 80 et en particulier de 100 équivalents en % des groupes méthylol présents dans (D).

14. Substances de revêtement selon l'une quelconque des revendications 1 à 13, **caractérisées en ce que** la résine de mélamine-formaldéhyde réactive (D) est alkylée avec des groupes alkyle choisis dans le groupe constitué par les groupes méthyle, propyle, isopropyle, n-butyle ou isobutyle, en particulier les groupes méthyle.

**15.** Substances de revêtement selon l'une quelconque des revendications 1 à 14, **caractérisées en ce qu'**elles contiennent la résine de mélamine-formaldéhyde hautement réactive (E) en une quantité de 3 à 8% en poids, par rapport à la substance de revêtement.

**16.** Substances de revêtement selon l'une quelconque des revendications 1 à 15, **caractérisées en ce que** la résine de mélamine-formaldéhyde hautement réactive (E) est alkylée avec des groupes butyle.

**17.** Substances de revêtement selon l'une quelconque des revendications 1 à 16, **caractérisées en ce qu'**elles contiennent 5 à 30% en poids, par rapport à la substance de revêtement, d'au moins un additif.

**18.** Substances de revêtement selon l'une quelconque des revendications 1 à 17, **caractérisées en ce que** l'additif (F) est choisi dans le groupe constitué par les diluants réactifs thermodurcissables ; les colorants solubles en dispersion moléculaire ; les agents de protection contre la lumière ; les antioxydants ; les mouillants ; les émulsifiants ; les additifs anti-trous d'épingle ; les additifs lubrifiants ; les catalyseurs pour la réticulation thermique ; les initiateurs radicalaires thermolabiles ; les promoteurs d'adhérence ; les agents d'étalement ; les adjuvants filmogènes ; les adjuvants de rhéologie ; les agents ignifuges ; les cires ; les biocides et les agents de matage, les pigments, charges et nanoparticules organiques et inorganiques, transparents.

**19.** Substances de revêtement selon la revendication 18, **caractérisées en ce que** l'additif est choisi dans le groupe constitué par les agents de protection contre la lumière, les mouillants, les additifs anti-trous d'épingle, les adjuvants de rhéologie et les nanoparticules inorganiques, transparentes.

**20.** Substances de revêtement selon l'une quelconque des revendications 1 à 19, **caractérisées en ce qu'**elles contiennent le solvant en une quantité de 30 à 55% en poids, par rapport à la substance de revêtement.

**21.** Substances de revêtement selon l'une quelconque des revendications 1 à 20, **caractérisées en ce qu'**elles contiennent le solvant en une quantité de 40 à 50% en poids, par rapport à la substance de revêtement.

**22.** Procédé pour la préparation de substances de revêtement à un composant, thermodurcissables selon l'une quelconque des revendications 1 à 21, **caractérisé en ce qu'**on mélange les constituants (A) à (G) les uns avec les autres et on homogénéise le mélange obtenu.

**23.** Utilisation des substances de revêtement à un composant, thermodurcissables selon l'une quelconque des revendications 1 à 21 et des substances de revêtement à un composant, thermodurcissables préparées selon le procédé selon la revendication 22 comme laques claires en vue de la réalisation de laquages clairs.

**24.** Utilisation selon la revendication 23, **caractérisée en ce que** les laquages clairs sont les laquages clairs de laquages à plusieurs couches conférant une teinte et/ou un effet.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0352298 B1
- DE 697029927 T2
- WO 9634905 A
- WO 9747700 A
- US 5574103 A
- EP 0604922 A1
- US 5187199 A
- EP 0843694 B1
- EP 1042402 B1
- US 3479328 A
- US 3674838 A
- US 4126747 A
- US 4279833 A
- US 4340497 A
- DE 19625773 A1
- DE 3807571 A1
- DE 3706095 A1
- EP 0358153 B1
- US 4754014 A1
- DE 4421823 A1
- WO 9222615 A
- DE 19709465 A1
- DE 19709476 A1
- DE 2848906 A1
- DE 19524182 A1
- DE 19828742 A1
- DE 19628143 A1
- DE 19628142 A1
- EP 0554783 A1
- WO 9527742 A
- WO 8202387 A
- WO 9802466 A
- DE 19850243 A1
- US 4939213 A1
- US 5084541 A1
- EP 0624577 A1
- EP 0159117 B1
- WO 9749745 A
- WO 9749747 A
- CA 2163591 A1
- US 4419513 A1
- US 4454317 A1
- EP 0646608 A1
- US 4801675 A1
- EP 0183976 A1
- DE 4015155 A1
- EP 0303150 A1
- EP 0496208 A1
- EP 0524500 A1
- EP 0566037 A1
- US 5258482 A1
- US 5290902 A1
- EP 0649806 A1
- DE 4229183 A1
- EP 0531820 A1
- WO 9952964 A
- EP 0817614 A1


### In der Beschreibung aufgeführte Nicht-Patentliteratur


- Versatic®-Säurert. Römpp Lexikon Lacke und Druckfarben. Georg Thieme Verlag, 1998, 605, 606
- Römpp Lexikon Lacke und Druckfarben. Georg Thieme Verlag, 1998, 598
- Paints, Coatings and Solvents. Wiley-VCH, 1998, 327-373
- **Roger Talbert.** Curing in Seconds with NIR. *Industrial Paint & Powder,* April 2001, 30-33
- Lackiertechnik, NIR-Trocknung im Sekundentakt von Flüssig- und Pulverlacken. *Galvanotechnik,* vol. 90 (11), 3098-3100